# FASCICULE DE BREVET EUROPEEN

(11) **EP 2 707 623 B1**
(45) Date de publication et mention de la délivrance du brevet: **05.04.2017**
(21) Numéro de dépôt: 12719391.0
(22) Date de dépôt: 09.05.2012
(51) Int. Cl.: F16F 7/14, E04H 9/02

(54) **SYSTÈME DE SUPPORT ÉLASTIQUE À SEUIL DE FILTRATION DE CHOCS, NOTAMMENT POUR LA SUSPENSION DE MATÉRIEL À BORD D'UN NAVIRE**
STOSSFILTERNDES SOLLWERTKONFORMES STÜTZSYSTEM, INSBESONDERE FÜR EINE AUSRÜSTUNGSAUFHÄNGUNG AN BORD EINES SCHIFFES
SHOCK-FILTERING SET-POINT RESILIENT SUPPORTING SYSTEM INTENDED, IN PARTICULAR, FOR EQUIPMENT SUSPENSION ON BOARD A VESSEL

(30) Priorité: 11.05.2011 FR 1154069
(43) Date de publication de la demande: 19.03.2014
(73) Titulaire: DCNS, 75015 Paris (FR)
(72) Inventeur: MONTEIL, Dominique, F-16600 Ruelle (FR); SEGUINOT, Didier, F-16600 Mornac (FR); ARMBRUST, Marie Anne, F-16000 Angouleme (FR); BRUNEAU, Hervé, F-16430 Champniers (FR)
(74) Mandataire: Lavoix
(86) Numéro de dépôt international: PCT/EP2012/058530
(87) Numéro de publication internationale: WO 2012/152827

(56) Documents cités:
- EP-A1- 0 553 633
- FR-A1- 2 559 863
- FR-A1- 2 827 034
- JP-A- 2000 074 132
- JP-A- 2006 266 074
- JP-A- 2011 042 974
- US-A- 5 549 285
- US-A1- 2011 017 561

## Description

La présente invention concerne un système de support élastique à seuil de filtration de chocs, notamment pour la suspension de matériel à bord d'un navire. Le document US 5 549 285, divulgue un tel système de support élastique à seuil de filtration de chocs, notamment pour la suspension de matériel à bord d'un navire, qui comprend une semelle porte-matériel associée à une semelle d'appui à travers un ensemble amortisseur à spires métalliques.

D'une façon générale, on connaît dans l'état de la technique par le document FR A 2 559 863, un support résilient à seuil, notamment pour la suspension de dispositifs ou matériels sur des navires.

Un tel support comporte un élément de support en forme de U, en matériau résilient, dont l'une des branches est fixée à la structure porteuse telle que le navire et dont l'autre branche supporte le dispositif ou matériel, les deux branches étant rigidifiées par une entretoise s'étendant entre celles-ci, formée par une tige fracturable dans un plan sensiblement parallèle aux branches du U et reliée aux deux branches, la liaison avec l'une au moins desdites branches étant assurée par un second élément fracturable dans la direction de la tige.

Cependant un tel support n'est pas approprié dans certaines applications spécifiques en raison de contraintes particulières.

Ainsi par exemple ce type de supports n'est pas adapté pour recevoir certains matériels comme des conteneurs de lancement de missiles tels que choisis par exemple dans la gamme des conteneurs connus sous la marque SYLVER® de la demanderesse.

Le ou chaque conteneur de lancement est reçu dans un ou des puits correspondants du navire de manière que leur partie supérieure affleure le pont du navire et que leur partie inférieure soit fixée rigidement au fond du puits et donc à la structure du navire.

Or ceci présente un certain nombre d'inconvénients notamment au niveau de la protection des missiles ou de façon générale des munitions dans le ou chaque conteneur car les chocs que subit le navire sont transmis intégralement aux munitions stockées dans les conteneurs.

Ceci est par exemple le cas lors d'explosions sous-marines qui peuvent se traduire par des chocs de plusieurs dizaines de g dans la structure du navire que le support résilient connu ne permet pas d'absorber.

De plus ce support ne permet pas non plus de garantir le maintien en position de tir correcte du conteneur.

Le but de l'invention est donc de résoudre ces problèmes.

A cet effet l'invention a pour objet un système de support élastique à seuil de filtration de chocs, notamment pour la suspension de matériel à bord d'un navire, caractérisé en ce qu'il comporte une semelle porte-matériel associée à une semelle d'appui du navire à travers des moyens d'amortissement à seuil comprenant au moins un ensemble amortisseur à spires métalliques associés à des barrettes à seuil de rupture montées sous précontrainte entre les deux semelles.

Selon d'autres caractéristiques prises seules ou en combinaison :
- les moyens d'amortissement comprennent au moins deux ensembles amortisseurs à spires métalliques disposés symétriquement de part et d'autre de la semelle porte-matériel,
- les spires métalliques se présentent sous la forme d'au moins un organe à ressort hélicoïdal, disposé en position allongée entre les semelles et dont les bords opposés sont engagés dans des trous de passage de traverses de liaison correspondantes des semelles,
- chaque barrette de rupture comporte deux portions de barrette raccordées par une goupille frangible et dont chaque extrémité est associée à une semelle,
- les portions de barrette comportent une portion de barrette mâle dont une extrémité est adaptée pour s'engager dans une chape d'une extrémité d'une portion de barrette femelle correspondante et en ce que la goupille frangible s'étend transversalement dans la chape de la portion de barrette femelle et la portion de barrette mâle,
- au moins une extrémité de chaque barrette de rupture est filetée et est engagée dans un trou de passage d'une patte de fixation sur la semelle correspondante et coopère avec un écrou correspondant pour permettre le montage sous précontrainte de cette barrette entre les semelles,
- les deux extrémités de chaque barrette sont filetées et en ce que chacune de celles-ci est adaptée pour être engagée dans un trou d'une patte de fixation et pour coopérer avec un écrou correspondant,
- chaque écrou présente une portée d'appui sphérique adaptée pour coopérer avec une surface d'appui complémentaire de la patte correspondante,
- les moyens d'amortissement à seuil comportent au moins deux barrettes à seuil de rupture associées et montées tête-bêche entre les semelles,
- les barrettes à seuil de rupture sont inclinées en direction de l'axe du matériel,
- les moyens d'amortissement à seuil comportent au moins deux jeux de deux barrettes disposés symétriquement de part et d'autre du matériel, et
- le matériel présente une section rectangulaire et en ce que les deux ensembles amortisseurs à spires métalliques sont disposés symétriquement sur deux côtés de celui-ci tandis que les deux jeux de deux barrettes sont disposés symétriquement sur les deux autres côtés de celui-ci.

L'invention sera mieux comprise à l'aide de la description qui va suivre donnée à titre d'exemple et faite en se référant aux dessins annexés sur lesquels :
- la figure 1 représente une vue en perspective d'un conteneur de lancement de missile équipé de moyens d'amortissement;
- les figures 2 et 3 représentent des vues partielles en perspective de la partie supérieure de ce conteneur en position dans un puits de réception d'un navire;
- la figure 4 représente une vue en perspective à échelle agrandie des moyens d'amortissement équipant la partie inférieure du conteneur représenté sur les figures précédentes;
- la figure 5 représente une vue de côté de ces moyens d'amortissement; et
- la figure 6 représente une vue de détail d'une barrette à seuil de rupture entrant la constitution de ces moyens d'amortissement.

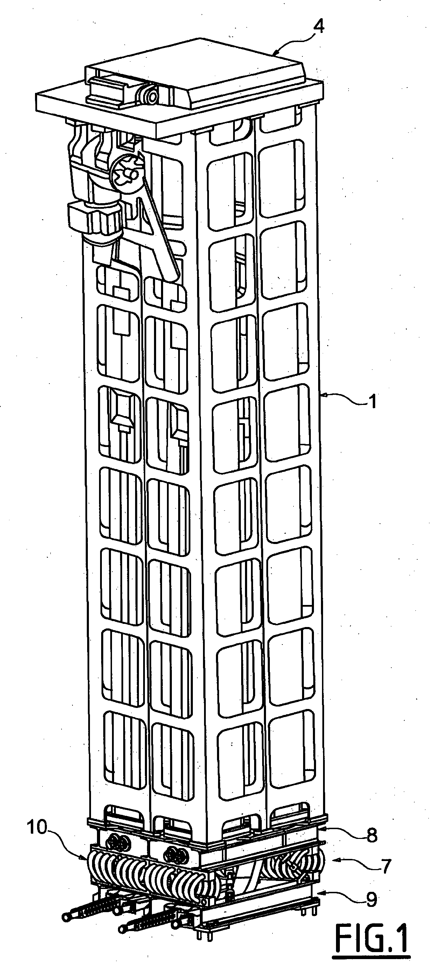

On a en effet illustré sur ces figures 1 à 3, un conteneur de lancement de missile qui est désigné par la référence générale 1 sur ces figures et qui est reçu dans un puits de réception correspondant 2 d'un navire 3.

Dans l'exemple de réalisation illustré, le conteneur et le puits présentent des axes verticaux, la partie supérieure du conteneur affleurant par exemple le pont du navire et étant munie d'une trappe de fermeture désignée par la référence générale 4, escamotable lors du tir d'un missile.

Comme cela est également illustré, de façon classique, ces missiles sont par exemple reçus dans le conteneur 1 avec leurs alvéoles ou capsules de protection dont l'une est par exemple désignée par la référence générale 5.

En fait et comme cela est illustré sur ces figures, le conteneur de lancement 1 est reçu avec un débattement axial et latéral contrôlé dans le puits et la paroi latérale de ce conteneur est munie, dans sa partie supérieure, de moyens de centrage/guidage dans le puits, formés par exemple par des butées en matériau d'amortissement dont l'une est visible sur ces figures et désignée par la référence générale 6.

Ces butées en matériau d'amortissement sont alors par exemple disposées entre le conteneur et la paroi correspondante du puits pour centrer et guider par exemple la partie supérieure de ce conteneur dans ce puits.

Dans sa partie inférieure le conteneur est associé et repose sur des moyens amortisseurs désignés par la référence générale 7 sur la figure 1, comportant une semelle porte-conteneur désignée par la référence générale 8 associée à une semelle d'appui du navire désignée par la référence générale 9, à travers des moyens d'amortissement à seuil de filtration de choc désignés par la référence générale 10.

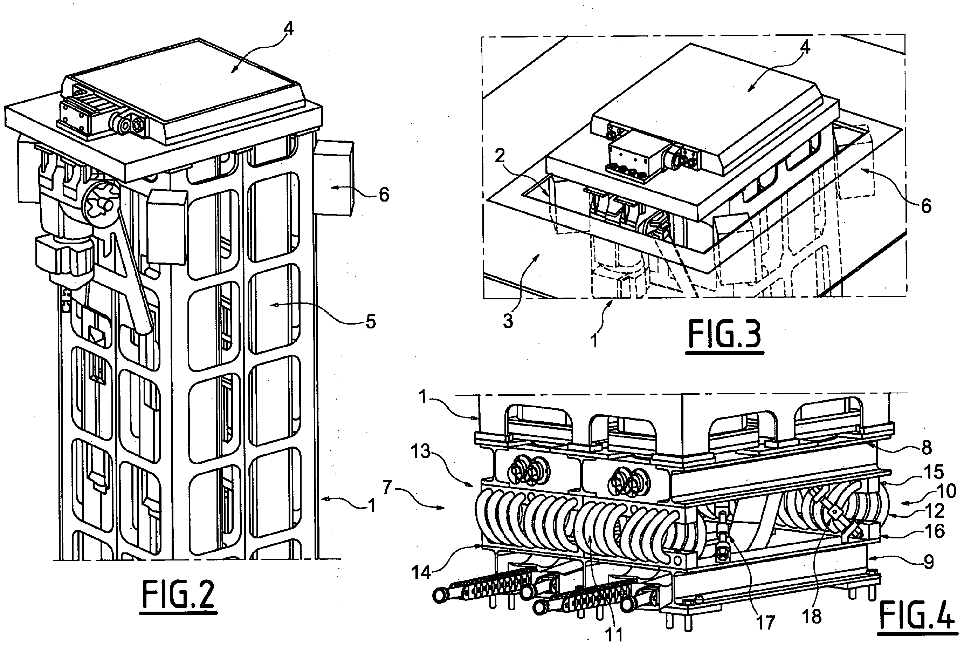

Ces moyens d'amortissement seront décrits plus en détails sur les figures 4, 5 et 6.

En fait et comme cela est illustré, ces moyens d'amortissement comprennent au moins un ensemble amortisseur à spires métalliques et dans l'exemple illustré au moins deux ensembles amortisseurs à spires métalliques, disposés symétriquement de part et d'autre du conteneur et désignés par les références générales 11 et 12 sur ces figures.

En fait, les ensembles amortisseurs à spires se présentent par exemple sous la forme d'au moins un organe à ressort hélicoïdal disposé en position allongée entre les semelles et dont les bords opposés sont engagés dans des trous de passage de traverses de liaison correspondantes des semelles telles que par exemple les traverses 13, 14, 15 et 16 illustrées sur ces figures.

Ces moyens d'amortissement comportent également des barrettes à seuil de rupture montées sous précontrainte entre les deux semelles dont deux respectivement 17 et 18 sont illustrées sur ces figures.

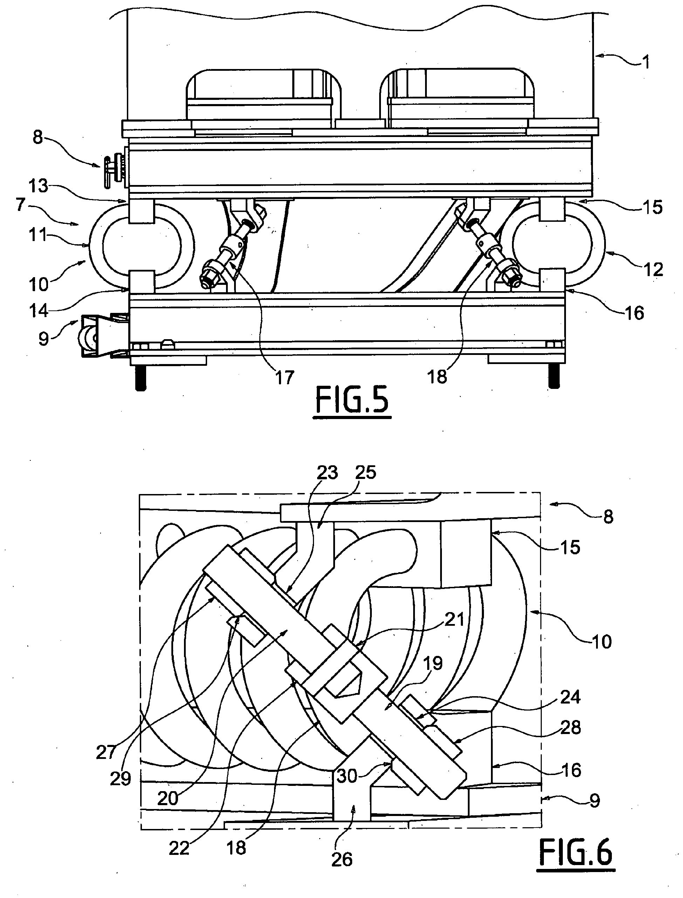

L'une de ces barrettes de rupture 18 est illustrée plus en détail sur la figure 6.

Cette barrette de rupture comporte alors deux portions de barrette respectivement 19 et 20 raccordées par une goupille frangible 21 et dont chaque extrémité est associée à une semelle.

Ainsi par exemple chaque barrette comporte une portion de barrette mâle désignée par la référence générale 20, dont une extrémité est adaptée pour s'engager dans une chape 22 d'une extrémité d'une portion de barrette femelle 19 correspondante, la goupille frangible 21 s'étendant transversalement dans la chape 22 de la portion de barrette femelle 19 et à travers la portion de barrette mâle 20.

Comme cela est également visible sur cette figure 6, au moins une extrémité de chaque barrette 18 est filetée et est engagée dans un trou de passage respectivement 23, 24 d'une patte de fixation 25, 26 sur la semelle correspondante 8, 9 et coopère avec un écrou correspondant 27, 28 pour permettre le montage sous précontrainte de cette barrette entre les semelles.

Dans l'exemple de réalisation illustré, les deux extrémités de chaque barrette sont filetées et chacune de celles-ci est adaptée pour être engagée dans un trou d'une patte de fixation et pour coopérer avec un écrou correspondant.

On notera également que chaque écrou présente une portée d'appui sphérique respectivement 29 et 30, adaptée pour coopérer avec une surface d'appui complémentaire de la patte correspondante 25, 26.

Les moyens d'amortissement à seuil peuvent comporter plusieurs barrettes à seuil de rupture associées.

Ainsi par exemple au moins deux barrettes à seuil de rupture associées et montées tête-bêche entre les semelles, peuvent être envisagées.

Celles-ci sont avantageusement inclinées en direction de l'axe du conteneur 1 comme cela est visible sur ces figures.

En fait et selon le mode de réalisation représenté, les moyens d'amortissement peuvent comporter deux jeux de deux barrettes disposés symétriquement de part et d'autre du conteneur.

C'est ainsi que dans l'exemple illustré, le conteneur présente une section rectangulaire et deux ensembles amortisseurs à spires métalliques sont disposés symétriquement sur deux côtés de celui-ci, tandis que deux jeux de deux barrettes sont disposés symétriquement sur les deux autres côtés de celui-ci.

Une telle structure permet par exemple à partir d'un choc d'entrée de 30 g en vertical ou de 15 g en transversal, d'absorber l'énergie de choc pour obtenir un maximum de 10 g sur la munition embarquée, avec un chargement de munitions variable de 1 à 4 munitions c'est-à-dire une évolution de la masse des munitions de 150 à 600 kilos, un chargement de munitions dissymétrique ou encore une prise en compte de l'effort lié au départ d'un missile (35 KN dissymétrique au lanceur) en sachant qu'en conditions normales d'utilisation (tir de départ missile, mouvements de la plateforme, etc...), les axes des alvéoles de lancement doivent respecter une fidélité de position de l'ordre 1,5 mrad.

Ainsi, on intègre un ensemble amortisseur avec un seuil de déclenchement dans la fixation du conteneur/lanceur sur le navire.

En conditions normales d'utilisation, le lanceur conserve ses caractéristiques de raideur pour satisfaire les exigences d'alignement des missiles et en cas de chocs liés par exemple à des explosions sous-marines, les amortisseurs se déclenchent aux valeurs de calibrage.

Ceci permet de limiter les accélérations au niveau des munitions afin de les préserver.

Comme cela a été indiqué précédemment, les barrettes sont montées avec une précontrainte au niveau des moyens d'amortissement.

Dans ces conditions, les barrettes sont en extension et résistent aux efforts générés par l'écrasement des amortisseurs.

En cas de choc lié par exemple à une explosion sous-marine, la mise en mouvement du lanceur du bas vers le haut, provoque un écrasement supplémentaire des spires.

A cet instant les barrettes ne sont plus en tension. C'est au retour du choc, lorsque les barrettes se remettent en place que la rupture des barrettes frangibles s'effectue.

Ce sont ensuite les amortisseurs qui prennent le relais pour protéger les munitions.

En cas de choc transversal, les efforts appliqués sur le lanceur provoquent un couple au niveau des barrettes. Les deux barrettes qui travaillent en compression sont rompues à la première impulsion de choc, les deux autres étant cassées au premier retour du choc.

Les amortisseurs prennent ensuite le relais pour filtrer les accélérations et préserver les munitions.

Ce principe permet de diviser par deux les accélérations du choc vertical soit 15 g.

On notera qu'après un choc d'explosion sous-marine alors que les barrettes se sont rompues, il est possible de reconfigurer l'installation pour que le lanceur retrouve sa capacité nominale, en remplaçant simplement les barrettes.

On conçoit alors que ces moyens d'amortissement avec un seuil de déclenchement permettent de limiter les contraintes lors des calculs de dimensionnement du lanceur.

Ceci permet non seulement de réduire d'une manière générale la tenue mécanique du lanceur mais également de réduire les efforts aux interfaces navire et aux interfaces munitions.

Il va de soi bien entendu que d'autres modes de réalisation encore peuvent être envisagés.

## Revendications

1. Système de support élastique à seuil de filtration de chocs, notamment pour la suspension de matériel (1) à bord d'un navire, **caractérisé en ce qu'**il comporte une semelle porte-matériel (8) associée à une semelle d'appui (9) du navire à travers des moyens d'amortissement à seuil (10) comprenant au moins un ensemble amortisseur à spires métalliques (11, 12) associés à des barrettes à seuil de rupture (17, 18) montées sous précontrainte entre les deux semelles (8, 9).

2. Système selon la revendication 1, **caractérisé en ce que** les moyens d'amortissement (10) comprennent au moins deux ensembles amortisseurs à spires métalliques (11, 12) disposés symétriquement de part et d'autre de la semelle porte-matériel (8).

3. Système selon la revendication 1 ou 2, **caractérisé en ce que** les spires métalliques se présentent sous la forme d'au moins un organe à ressort hélicoïdal (11, 12), disposé en position allongée entre les semelles (8, 9) et dont les bords opposés sont engagés dans des trous de passage de traverses de liaison correspondantes (13, 14, 15, 16) des semelles (8, 9).

4. Système selon l'une quelconque des revendications précédentes, **caractérisé en ce que** chaque barrette de rupture (17, 18) comporte deux portions de barrette (19, 20) raccordées par une goupille frangible (21) et dont chaque extrémité est associée à une semelle (8, 9).

5. Système selon la revendication 4, **caractérisé en ce que** les portions de barrette (17, 18) comportent une portion de barrette mâle (20) dont une extrémité est adaptée pour s'engager dans une chape (22) d'une extrémité d'une portion de barrette femelle correspondante (19) et **en ce que** la goupille frangible (21) s'étend transversalement dans la chape de la portion de barrette femelle et la portion de barrette mâle.

6. Système selon l'une quelconque des revendications précédentes, **caractérisé en ce qu'**au moins une extrémité de chaque barrette de rupture (17, 18) est filetée et est engagée dans un trou de passage (23, 24) d'une patte de fixation (25, 26) sur la semelle correspondante (8, 9) et coopère avec un écrou correspondant (27, 28) pour permettre le montage sous précontrainte de cette barrette (17, 18) entre les semelles (8, 9).

7. Système selon la revendication 6, **caractérisé en ce que** les deux extrémités de chaque barrette (17, 18) sont filetées et **en ce que** chacune de celles-ci est adaptée pour être engagée dans un trou (23, 24) d'une patte de fixation (25, 26) et pour coopérer avec un écrou correspondant (27, 28).

8. Système selon la revendication 6 ou 7, **caractérisé en ce que** chaque écrou (27, 28) présente une portée d'appui sphérique (29, 30) adaptée pour coopérer avec une surface d'appui complémentaire de la patte correspondante (25, 26).

9. Système selon l'une quelconque des revendications précédentes, **caractérisé en ce que** les moyens d'amortissement à seuil comportent au moins deux barrettes (17, 18) à seuil de rupture associées et montées tête-bêche entre les semelles (8, 9).

10. Système selon l'une quelconque des revendications précédentes, **caractérisé en ce que** les barrettes à seuil de rupture (17, 18) sont inclinées en direction de l'axe du matériel (1).

11. Système selon la revendication 9 ou 10, **caractérisé en ce que** les moyens d'amortissement à seuil (10) comportent au moins deux jeux de deux barrettes (17, 18) disposés symétriquement de part et d'autre du matériel (1).

12. Système selon la revendication 11, **caractérisé en ce que** le matériel (1) présente une section rectangulaire et **en ce que** les deux ensembles amortisseurs à spires métalliques (11, 12) sont disposés symétriquement sur deux côtés de celui-ci tandis que les deux jeux de deux barrettes (17, 18) sont disposés symétriquement sur les deux autres côtés de celui-ci.

## Patentansprüche

1. Elastisches Stützsystem mit Schockfilterschwelle, insbesondere für die Aufhängung von Material (1) an Bord eines Schiffes, **dadurch gekennzeichnet, dass** es eine Materialträgersohle (8) aufweist, die mit einer Trägersohle (9) des Schiffes mit Hilfe von Schwellendämpfungsmitteln (10) verbunden ist, umfassend mindestens eine Dämpfungseinheit mit Metallwindungen, die mit Bruchschwellenstiften (17, 18) verbunden sind, die unter Vorspannung zwischen den Sohlen (8, 9) bestiegen sind.

2. System nach Anspruch 1, **dadurch gekennzeichnet, dass** die Dämpfungsmittel (10) mindestens zwei Dämpfungseinheiten mit Metallwindungen (11, 12) umfassen, die symmetrisch auf beiden Seiten der Materialträgersohle (8) angeordnet sind.

3. System nach Anspruch 1 oder 2, **dadurch gekennzeichnet, dass** die Metallwindungen die Form von mindestens einem Organ mit Spiralfeder (11, 12) aufweisen, die in verlängerter Betriebstellung zwischen den Sohlen (8, 9) angeordnet ist, und deren gegenüber liegende Ränder in den entsprechenden Durchgangslöchern von Verbindungsstegen (13, 14, 15, 16) von Sohlen (8, 9) eingreifen.

4. System nach einem der vorhergehenden Ansprüche, **dadurch gekennzeichnet, dass** jeder Bruchstift (17, 18) zwei Stiftabschnitte (19, 20) umfasst, die durch einen zerbrechbaren Zapfen (21) verbunden sind, und wobei jedes Ende mit einer Sohle (8, 9) assoziiert ist.

5. System nach Anspruch 4, **dadurch gekennzeichnet, dass** die Stiftabschnitte (17, 18) einen Außenstiftabschnitt (20) umfassen, von dem ein Ende ausgelegt ist, um in eine Haube (22) eines Endes eines entsprechenden Innenstiftabschnitts (19) einzugreifen, und dadurch, dass sich der zerbrechbare Zapfen (21) quer in der Haube des Innenstiftabschnitts und des Außenstiftabschnitts erstreckt.

6. System nach einem der vorhergehenden Ansprüche, **dadurch gekennzeichnet, dass** mindestens ein Ende jedes Bruchstifts (17, 18) gewindegeschnitten und in ein Durchgangsloch (23, 24) eines Befestigungsfußes (25, 26) auf der entsprechenden Sohle (8, 9) eingegriffen ist und mit einer entsprechenden Schraubenmutter (27, 28) zusammenarbeitet, um der Beschlag unter Vorspannung dieses Stifts (17, 18) zwischen den Sohlen (8, 9) zu ermöglichen.

7. System nach Anspruch 6, **dadurch gekennzeichnet, dass** die zwei Enden jedes Stifts (17, 18) gewindegeschnitten sind, und dadurch, dass jedes derselben ausgelegt ist, um in ein Loch (23, 24) eines Befestigungsfußes (25, 26) eingegriffen zu sein, und um mit einer entsprechenden Schraubenmutter (27, 28) zusammenzuarbeiten.

8. System nach Anspruch 6 oder 7, **dadurch gekennzeichnet, dass** jede Schraubenmutter (27, 28) einen sphärischen Auflageträger (29, 30) aufweist, der ausgelegt ist, um mit einer komplementären Auflagefläche des entsprechenden Fußes (25, 26) zusammenzuarbeiten.

9. System nach einem der vorhergehenden Ansprüche, **dadurch gekennzeichnet, dass** die Schwellen-Dämpfungsmittel mindestens zwei Stifte (17, 18) mit Bruchschwelle umfassen, die assoziiert und entgegengesetzt zwischen den Sohlen (8, 9) bestiegen sind.

10. System nach einem der vorhergehenden Ansprüche, **dadurch gekennzeichnet, dass** die Bruchschwellenstifte (17, 18) in Richtung der Materialachse (1) geneigt sind.

11. System nach Anspruch 9 oder 10, **dadurch gekennzeichnet, dass** die Schwellen-Dämpfungsmittel (10) mindestens zwei Sätze von zwei Stiften (17, 18) umfassen, die symmetrisch auf beiden Seiten des Materials (1) angeordnet sind.

12. System nach Anspruch 11, **dadurch gekennzeichnet, dass** das Material (1) einen rechtwinkligen Abschnitt aufweist, und dadurch, dass die zwei Dämpfungseinheiten mit Metallwindungen (11, 12) symmetrisch auf zwei Seiten derselben angeordnet sind, während die zwei Sätze von zwei Stiften (17, 18) symmetrisch auf den zwei anderen Seiten derselben angeordnet sind.

## Claims

1. Shock-filtering set-point elastic supporting system, intended, in particular, for equipment (1) suspension on board a vessel, **characterised in that** it includes a load-bearing base (8) connected with a support base (9) of the vessel via set-point damping means (10) comprising at least one damping assembly with metallic windings (11, 12) connected to set-point breaking pins (17, 18) mounted with pretension between the two bases (8, 9).

2. System according to claim 1, **characterised in that** the damping means (10) comprise at least two damping assemblies with metallic windings (11, 12) arranged symmetrically on either side of the load-bearing base (8).

3. System according to claim 1 or 2, **characterised in that** the metal windings are in the form of at least one coil spring organ (11, 12) arranged lying flat between the bases (8, 9), with its opposite edges engaged in openings for corresponding connection lugs (13, 14, 15, 16) of the bases (8, 9).

4. System according to any one of the preceding claims, **characterised in that** each break strip (17, 18) includes two portions of strip (19, 20) connected by a frangible pin (21), each end of said break strip being connected to a base (8, 9).

5. System according to claim 4, **characterised in that** the portions of the strips (17, 18) include a male portion (20) of strip with one end suited to engage with a screed (22) on one end of a corresponding female portion (19) of strip, whereby the frangible pin (21) extends transversely into the screed of the female portion and through the male portion of the strip.

6. System according to any one of the preceding claims, **characterised in that** at least one end of each break strip (17, 18) is threaded and engaged with an opening (23, 24) of a bracket (25, 26) on the corresponding base (8, 9), and co-operates with a corresponding nut (27, 28) to allow for the pretensioned mounting of the strip (17, 18) between the bases (8, 9).

7. System according to claim 6, **characterised in that** both ends of each strip (17, 18) are threaded, and each is suited to engage with an opening (23, 24) in a bracket (25, 26) and to co-operate with a corresponding nut (27, 28).

8. System according to claim 6 or 7, **characterised in that** each nut (27, 28) has a spherical support range (29, 30) suited to co-operate with an additional support surface of the corresponding bracket (25, 26).

9. System according to any one of the preceding claims, **characterised in that** the set-point damping means include at least two set-point breaking pins (17, 18) that are connected and mounted head-to-tail between the bases (8, 9).

10. System according to any of the preceding claims, **characterised in that** the set-point break strips (17, 18) are inclined in the direction of the axis of the equipment (1).

11. System according to claim 9 or 10, **characterised in that** the damping means (10) include at least two sets of two strips (17, 18), arranged symmetrically on either side of the equipment (1).

12. System according to claim 11, **characterised in that** the equipment (1) has a rectangular section, and both damping assemblies with metal windings (11, 12) are arranged symmetrically on two sides of the equipment, whilst the two sets of two strips (17, 18) are symmetrically arranged on the two other sides of the equipment.
